# EUROPÄISCHE PATENTSCHRIFT

(11) **EP 0 474 588 B1**
(45) Veröffentlichungstag und Bekanntmachung des Hinweises auf die Patenterteilung: **28.02.1996**
(21) Anmeldenummer: 91810592.5
(22) Anmeldetag: 23.07.1991
(51) Int. Cl.: B24B 47/22, B24B 27/04, B23Q 7/04

(54) **Bearbeitungsvorrichtung mit Roboter und Werkzeugaufnahme**
Apparatus for manufacturing with robot and tool support
Dispositif pour usiner avec robot et support d'outil

(30) Priorität: 31.08.1990 CH 2831/90
(43) Veröffentlichungstag der Anmeldung: 11.03.1992
(73) Patentinhaber: ABB FLEXIBLE AUTOMATION AG, CH-8048 Zürich (CH)
(72) Erfinder: Bärtsch, Ronny, CH-8424 Embrach (CH)
(74) Vertreter: Hammer, Bruno, Dr.

(56) Entgegenhaltungen:
- WO-A-87/01333
- DE-A- 3 105 578
- DE-A- 3 519 993
- DE-A- 3 844 152
- JP-A-61 188 095
- US-A- 4 860 500
- PATENT ABSTRACTS OF JAPAN vol. 11, no. 180 (M-597)(2627) 10. Juni 1987 & JP-A-62 009 862 ( MITSUBISHI ELECTRIC ) 17. Januar 1987
- PATENT ABSTRACTS OF JAPAN vol. 8, no. 270 (M-344)(1707) 11. Dezember 1984 & JP-A-59 142 062 ( KOBE SEIKOSHO ) 15. August 1984
- PATENT ABSTRACTS OF JAPAN vol. 12, no. 475 (M-774)(3322) 13. Dezember 1988 & JP-A-63 196 374 ( TOYOTA MOTOR ) 15. August 1988

## Beschreibung

Die Erfindung bezieht sich auf eine Bearbeitungsvorrichtung mit Roboter und Werkzeugaufnahme für sich abnutzende Werkzeuge für die Bearbeitung von Werkstücken, nach dem Oberbegriff der Ansprüche 1 und 2. Eine derartige Vorrichtung ist aus WO-A-87/01333 bekannt.

Bei Bearbeitungsvorrichtungen mit Bearbeitungswerkzeugen, die sich relativ stark abnutzen und verschleissen, wie beispielsweise Entgratwerkzeuge, Bürsten, wie Topfbürsten usw. nimmt die Wirksamkeit des Werkzeugs derart schnell ab, dass die Abnutzung bzw. der Verschleiss des Werkzeugs kompensiert werden sollte, um gleichmässige Bearbeitungsqualität zu erreichen oder die automatische Einsatzdauer der Vorrichtung zu gewährleisten.

Die publizierte Patentanmeldung WO-A-87/01333 beschreibt eine Bearbeitungseinrichtung mit Roboter und Werkzeugaufnahme für sich abnutzende Werkzeuge zum Berarbeiten von Werkstücken. Die Werkzeugaufnahme weist eine Stellvorrichtung zum Verändern der Lage des Werkzeugs, mindestens in der Richtung der Werkzeugaufnahme, auf. Bei dieser Bearbeitungseintrichtung wird die Abnutzung des Werkzeugs aufgrund der für das Werkzeug notwendigen Antriebsleistung bestimmt und die Lage des Werkzeugs zum Werkstück so geregelt, dass die Antriebsleistung weitgehend konstant bleibt.

Es ist auch schon vorgeschlagen worden, Roboter in Bearbeitungsvorrichtungen so zu programmieren, dass die Abnutzung des Werkzeugs softwaremässig kompensiert wird. Dadurch wird die an und für sich immer gleiche Bearbeitungsbahn des Roboterarms mit der Werkzeugaufnahme und dem Werkzeug am feststehenden Werkstück (werkzeuggeführter Betrieb der Bearbeitungvorrichtung) schrittweise, entgegen der Abnutzungsrichtung des Werkzeugs, verändert. Genauso können bei einer Bearbeitungsvorrichtung mit feststehender Werkzeugaufnahme mit Werkzeug und mit dem Roboterarm geführtem Werkstück (werkstückgeführter Betrieb der Bearbeitungsvorrichtung) die Bahn des Roboterarms in Richtung der Abnutzung des Werkzeugs verändert werden.

Der Verschleiss des Werkzeugs kann in Versuchen ermittelt werden. Die Bahn des Roboterarms kann dann den Versuchsergebnissen entsprechend softwaremässig schrittweise oder auch quasikontinuierlich korrigiert und angepasst werden. Genauso kann die effektive Abnutzung des Werkzeugs kontinuierlich oder in wählbaren Intervallen bestimmt werden und die Roboter-Arm-Bahn dem jeweiligen Messergebnis entsprechend korrigiert werden.

Derartige Bearbeitungsvorrichtungen sind anspruchsvoll in der Programmierung und vor allem auch bei der Anwendung für Werkstücke verschiedenster Formen aufwendig. Probleme können sich vor allem dann einstellen, wenn die Abnutzung des Werkzeugs abhängig von der Beschaffenheit des zu bearbeitenden Werkstückbereichs ungleichmässig erfolgt.

Die Erfindung, wie sie in den Ansprüchen beschrieben ist, bringt eine beträchtlich vereinfachte Bearbeitungsvorrichtung, mit der ausgezeichnete Bearbeitungsergebnisse mit sich abnutzenden Werkzeugen erzielt werden können. Eine derartige Vorrichtung nach der Erfindung ist durch die Merkmale im Kennzeichen der unabhängigen Ansprüche 1 oder 2 gekennzeichnet. Die abhängigen Ansprüche beziehen sich auf besonders vorteilhaft Ausbildungen von erfindungsgemässen Bearbeitungsvorrichtungen.

Die Referenz, gewöhnlich eine Referenzfläche, erlaubt auf einfachste Weise, das sich abnutzende Werkzeug, wie z.B. ein Entgratungswerkzeug oder eine Topfbürste, in Abnutzrichtung nachzustellen. Der Roboter der Bearbeitungsvorrichtung kann so programmiert sein, dass nach beispielsweise einer durch Versuche ermittelten Zahl von Arbeitsgängen bzw. Einsatzdauer oder bearbeiteten Werkstücken, Referenzfläche und Werkzeug in die gegenseitige Referenzlage gebracht werden. Das in der Werkzeugaufnahme gehaltene, abgenutzte und somit die Referenz nicht berührende Werkzeug wird in der Werkzeugaufnahme beispielsweise gelöst und axial zur Referenzfläche hin, bis sie sich berühren, verschoben. Dann wird das Werkzeug in der neuen Position fixiert und die Bearbeitung wird weitergeführt.

Unabhängig von effektiver Abnutzung, erfolgt damit immer die für den Bearbeitungsvorgang ideale Einstellung. Das jeweilige Neueinstellen der Lage des Werkzeugs in der Werkzeugaufnahme an der Referenz, ermöglicht das Anpassen der Werkzeugposition auch bei wechselnder und unterschiedlichster Abnutzung auf einfachste Weise.

Die Art des Nachstellens des Werkzeugs ist wesentlich einfacher im Vergleich zu softwaremässigen Kompensationsrechnungen und damit auch wesentlich robuster und funktionssicherer. Zudem ist die Anlage auch unempfindlich auf unterschiedliche Werkzeugbeschaffenheit.

Es kann auch ein Sensor, z.B. ein Endschalter, in der Werkzeugaufnahme vorgesehen sein, der beim Erreichen einer bestimmten Abnützung des Werkzeugs, betätigt wird und einen Werkzeugwechsel auslöst. Dies kann automatisch erfolgen oder aber lediglich den Bearbeitungsvorgang unterbrechen und etwa mit einem akustischen oder optischen Alarm das Bedienungspersonal anfordern. Die Bearbeitungsvorrichtung mit Roboter weist eine Werkzeugaufnahme auf, die es ermöglicht, sich abnutzendem Werkzeug entgegen - vereinfacht gesagt - der Abnutzungsrichtung nachzustellen. Das Nachstellen erfolgt bezogen auf eine feste Referenzfläche, die beim Nachstellen des beispielsweise axial verschiebbaren Werkzeugs mit der Referenzfläche zur Berührung gebracht wird. Die Bearbeitungsvorrichtung ist sowohl für werkzeuggeführten wie auch für werkstückgeführten Betrieb des Roboters geeignet. Die Bearbeitungsvorrichtung erlaubt das Nachstellen des Werkzeugs und Anpassen der Anlage für verschiedenste Bearbeitungsaufgaben an verschiedensten Werkstücken mit minimalem Aufwand. Die Werkzeugaufnahme ermöglicht den axialen Vorschub und das Fixieren des Werkzeugs und seines Antriebsmotors mit einfachen und zuverlässigen Mitteln.

Die Erfindung wird nachstehend anhand der schematischen Zeichnungen, welche Ausführungsbeispiele der Erfindung zeigen, näher erläutert. Es zeigen:
- Fig. 1: Eine Bearbeitungseinrichtung in werkstückgeführtem Betrieb;
- Fig. 2: eine Bearbeitungseinrichtung in werkzeuggeführtem Betrieb;
- Fig. 3: teilweise im Schnitt, eine Werkzeugaufnahme mit pneumatischer Vorrichtung zum Vorschieben des Werkzeugs in axialer Richtung.

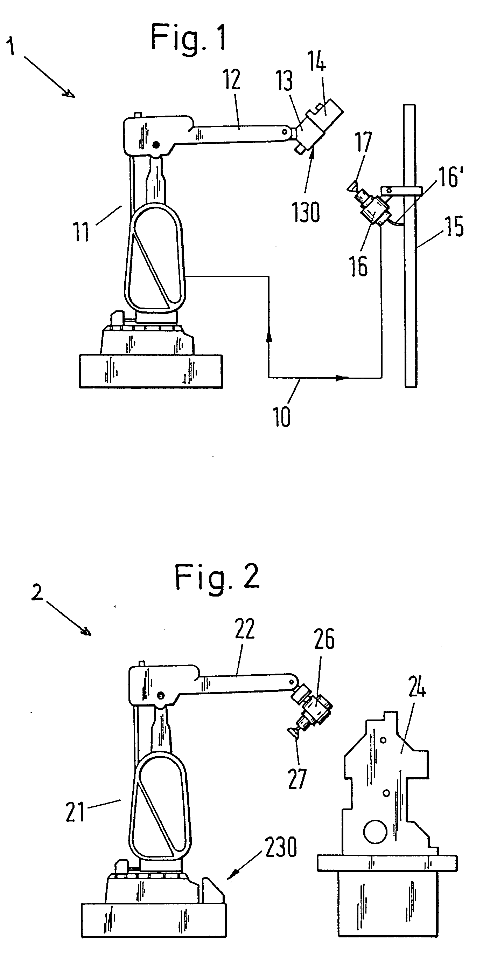

Die in Fig. 1 gezeigte, werkstückgeführte Bearbeitungseinrichtung 1 umfasst den Roboter 11, an dessen Arm 12 ein Greifer 13 angebracht ist. Das zu bearbeitende Werkstück 14 ist vom Greifer 13 gefasst. Die zu bearbeitenden Teile des Werkstücks werden zu dem, am feststehenden Ständer fixierten und in der Werkzeugaufnahme 16 gehaltenen Werkzeug 17, z.B. einer Topfbürste, geführt. Als Referenzfläche 130 dient eine Fläche des Greifers 13.

Zum Nachschieben des Werkzeugs 17 wird die Referenzfläche 130 mit dem Roboterarm in die definierte Lage vor das Werkzeug 17 gebracht. Die Werkzeugaufnahme 16 kann einen nicht gezeigten Luftmotor zum Antrieb des Werkzeugs 17 aufweisen, der über die Luftleitung 16′ mit Luft versorgt ist.

Die Steuerung und Betätigung des Luftmotors und der axialen Vorschubeinrichtung für die Topfbürste 17 kann elektrisch über die Steuerleitungen 10 von der Steuer-und Regelelektronik (nicht gezeichnet) des Roboters 11 zur Werkzeugaufnahme 16 erfolgen. Ein Alarmsignal, das den erforderlichen Wechsel der Topfbürste 17 anzeigt oder anfordert, kann über das Steuerkabel 10 zur Elektronik des Roboters 10 geführt werden und die Bearbeitungseinrichtung 1 beispielsweise stillsetzen.

Die werkzeuggeführte Bearbeitungseinrichtung 2 von Fig. 2 zeigt den Roboter 21, an dessen Roboterarm 22 die Werkzeugaufnahme 26 mit dem Werkzeug 27, z.B. ebenfalls einer Topfbürste, angebracht ist. Am Sockel, auf dem der Roboter 21 steht, ist eine Referenz 230 angebracht.

Zum Nachstellen des bei der Bearbeitung des Werkstücks 24 abgenutzten Werkzeugs 27 in der Werkzeugaufnahme, wird, umgekehrt wie im Zusammenhang mit der Beschreibung von Fig. 2, die Werkzeugaufnahme 26 mit dem Werkzeug 27 vor die Referenzfläche 230 geführt. Das Neueinstellen der Position des Werkzeugs in der Werkzeugaufnahme 26 mit z.B. einem Luftmotor für den Antrieb der Topfbürste 27, kann in analoger Weise erfolgen, wie dies für die werkstückgeführte Bearbeitungseinrichtung 1 von Fig. 1 beschrieben ist.

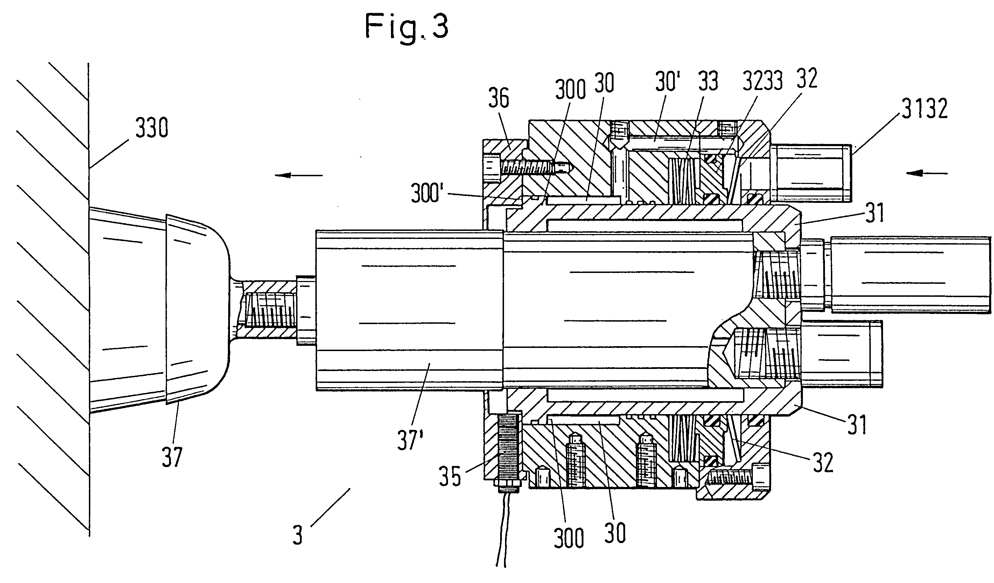

Fig. 3 zeigt eine Werkzeugaufnahme 3 mit beispielsweise einem Entgratungswerkzeug 37 oder einer Topfbürste. Die Werkzeugaufnahme 3 kann im werkzeuggeführten Betrieb der Bearbeitungseinrichtung am Handgelenk des Roboters befestigt sein. Der Roboter ist so programmiert, dass bei Beginn des Nachstellvorgangs die Werkzeugaufnahme 3 mit dem Werkzeug 37 zur festgelegten - in der Robotik spricht man von "teachen" bzw. geteachten - Ausgangslage erfolgt. In dieser Ausgangslage liegt des Werkzeug 37 unmittelbar der Referenzfläche 330 gegenüber. Das abgenutzte Werkzeug 37 berührt beim Beginn des Nachstellvorgangs die Referenzfläche 330 nicht.

Der Nachstellvorgang des Werkzeugs 37 in der Werkzeugaufnahme 3 läuft wie folgt ab. Die Führungshülse 31 ist mit dem Spannring 32, der über den Kolben 3233 mit dem Tellerfederpaket 33 druckbelastet ist, axial verspannt, d.h. fixiert. Der Spannring 32 wird nun über den Druckstutzen 3132 z.B. mit Druckluft entlastet, indem der Kolben 3233 der Druckkraft der Tellerfeder 33 auf den Kolben 3233 und den Spannring 32 kompensierend entgegenwirkt. Dadurch wird die Führungshülse 31 axial verschiebbar. Der Hohlraum 30 ist über den Kanal 30′ mit den Druckstutzen 3132 verbunden. Die axiale Verschiebung der Führungshülse 31, mit dem Antriebsmotor 37′ für das Werkzeug 37 erfolgt über die Ringkolbenfläche 300. Führungshülse 31 mit Antriebsmotor 37′ und Werkzeug 37 werden nun bis zum Anschlag des Werkzeugs 37 an die Referenzfläche 330 in Pfeilrichtung bewegt. In der besonderen, gezeichneten Lage ist die Führungshülse 31 im Bereich des Sensors 35, z.B. eines Näherungsschalters, und liegt gleichzeitig am Anschlag 300′, der vom Ringdeckel 36 des Gehäuses gebildet wird. Dieser löst ein Signal aus, z.B. optisch, akustisch und/oder durch Abschalten der Bearbeitungsvorrichtung, das anzeigt, dass das Werkzeug 37 verbraucht und durch ein neues zu ersetzen ist.

Im hier gezeigten Beispiel einer Werkzeugaufnahme wird das Werkzeug in einer Richtung axial verschoben. Es wäre aber durchaus denkbar, ein sich mehrseitig abnutzendes, z.B ein Schleifwerkzeug, das sich axial und radial abnutzt, in diesen beiden Richtungen nach dem gezeigten Prinzip mit Referenzen nachzustellen, bzw. in der Werkzeugaufnahme in eine geänderte Lage zu bringen.

## Patentansprüche

1. Bearbeitungseinrichtung mit Roboter (11) und Werkzeugaufnahme (16) mit sich abnutzendem Werkzeug (17) zum Bearbeiten von Werkstücken (14), wobei die Werkzeugaufnahme (16) eine Stellvorrichtung zum Verändern mindestens der Lage des Werkzeugs (17) in der Werkzeugaufnahme (16) in einer Richtung aufweist dadurch gekennzeichnet, dass die Bearbeitungseinrichtung eine am Roboterarm (12) angebrachte, in eine definierte Lage vor das Werkzeug (17) bringbare Referenz (130) zum Einstellen mindestens der Lage des Werkzeugs (17) in der Werkzeugaufnahme (16) in dieser Richtung, sowie einstellbare Steuermittel (10) für das zur Berührung bringen des Werkzeugs (17) mit der Referenz (130) aufweist, und dass die Bearbeitungsvorrichtung als werkstückgeführte Vorrichtung ausgebildet ist.

2. Bearbeitungseinrichtung mit Roboter (21) und Werkzeugaufnahme (26) mit sich abnutzendem Werkzeug (27) zum Bearbeiten von Werkstücken (24) wobei die Werkzeugaufnahme (26) eine Stellvorrichtung zum Verändern mindestens der Lage des Werkzeugs (27) in der Werkzeugaufnahme (26) in einer Richtung aufweist dadurch gekennzeichnet, dass die Bearbeitungsvorrichtung eine an einer, bezogen auf den Roboterstandort festen Stelle angebrachte Referenz (230) aufweist, um mit dem Werkzeug vor der Referenz (230) mindestens die Lage des Werkzeugs (27) in der Werkzeugaufnahme (26) in dieser Richtung einzustellen, sowie mit einstellbaren Steuermitteln (10) für das zur Berührung bringen des Werkzeugs (27) mit der Referenz (230), und dass die Bearbeitungsvorrichtung als werkzeuggeführte Vorrichtung ausgebildet ist.

3. Bearbeitungseinrichtung nach Anspruch 1 oder 2, mit hydraulisch und/oder pneumatisch angetriebener Stellvorrichtung (3, 30, 30', 300, 31, 32, 33) zum Verändern der Lage des Werkzeugs (37).

4. Bearbeitungseinrichtung nach Anspruch 1 oder 2 mit Federmitteln als Stellvorrichtung zum Verändern der Lage des Werkzeugs (17).

5. Bearbeitungseinrichtung nach einem der Ansprüche 1 bis 4, mit Steuermitteln (10), die nach einer wählbaren Zahl von Arbeitsvorgängen und/oder einer wählbaren Arbeitsdauer das Positionieren des Werkzeugs (17) gegenüber der Referenz (130) und die Neueinstellung des Werkzeugs (17) bewirken.

6. Bearbeitungsvorrichtung nach einem der Ansprüche 1 bis 5, mit Federmitteln als Antrieb für das Positionieren des Werkzeugs (17) in der Werkzeugaufnahme (16), wobei die Federmittel eine von der Lage des Werkzeugs (17) in der Werkzeugaufnahme (16) weitgehend unabhängige Kraft ausüben.

7. Bearbeitungsvorrichtung nach einem der Ansprüche 1 bis 6, mit einer Sensoranordnung (35), welche den Ersatz des Werkzeugs (37) in der Werkzeugaufnahme (3) feststellt und herbeiführt.

8. Bearbeitungsvorrichtung nach einem der Ansprüche 1 bis 7, bei der die Werkzeugaufnahme eine lösbare Feststellvorrichtung (32, 33, 3233, 3132, 30, 300) für das Festhalten der mit Hilfe der Referenz (330) ermittelten Lage des Werkzeugs (37) aufweist.

## Claims

1. Machining apparatus with robot (11) and tool mount (16) having a tool (17) subject to wear for the machining of workpieces (14), wherein the tool mount (16) has a positioning device for changing at least the position of the tool (17) in the tool mount (16) in one direction, characterized in that the machining apparatus has a reference (130) mounted on the robot arm (12) which can be brought into a defined position in front of the tool (17) for the setting of at least the position of the tool (17) in the tool mount in this direction, and also adjustable control means (10) for bringing the tool (17) into contact with the reference (130), and in that the machining apparatus is formed as a workpiece guided apparatus.

2. Machining apparatus with robot (21) and tool mount (26) having a tool (27) subject to wear for the machining of workpieces (24), wherein the tool mount (26) has a positioning device for changing at least the position of the tool (27) in the tool mount (26) in one direction, characterized in that the machining apparatus has a reference (230), mounted at a fixed position relative to the location of the robot in order, with the tool in front of the reference (230), to set at least the position of the tool (27) in the tool mount (26) in this direction, and also with adjustable control means (10) for bringing the tool (27) into contact with the reference (230); and in that the machining apparatus is formed as a tool guided apparatus.

3. Machining apparatus in accordance with claim 1 or claim 2, with a hydraulically and/or pneumatically driven positioning device (3, 30, 30', 300, 31, 32, 33) for changing the position of the tool (37).

4. Machining apparatus in accordance with claim 1 or claim 2 with spring means as a positioning device for changing a position of the tool (17).

5. Machining apparatus in accordance with one of the claims 1 to 4, with control means (10) which after a selectable number of working processes and/or a selectable working duration bring about the positioning of the tool opposite to the reference (130) and the new setting of the tool (17).

6. Machining apparatus in accordance with one of the claims 1 to 5 with spring means as a drive for the positioning of the tool (17) in the tool mount (16), with the spring means exerting a force which is largely independent of the position of the tool (17) in the tool mount (16).

7. Machining apparatus in accordance with one of the claims 1 to 6 with a sensor arrangement (35) which determines and brings about the substitution of the tool (37) in the tool mount (3).

8. Machining apparatus in accordance with one of the claims 1 to 7 in which the tool has a releasable holding device (32, 33, 3233, 3132, 30, 300) for securing the position of the tool (37) determined with the aid of the reference (330).

## Revendications

1. Dispositif d'usinage à robot (11) et logement (16) d'outil, comprenant un outil (17) qui s'use pour l'usinage de pièces (14), le logement (16) d'outil comprenant un dispositif de positionnement pour la modification d'au moins la position de l'outil (17) dans le logement (16) d'outil dans une direction, caractérisé en ce que le dispositif d'usinage comprend une référence (130) placée sur le bras (12) du robot, pouvant être mise à une position définie devant l'outil (17) et destinée au réglage d'au moins la position de l'outil (17) dans le logement (16) d'outil dans cette direction, ainsi que des organes réglables (10) de commande de la mise en contact de l'outil (17) avec la référence (130) et en ce que le dispositif d'usinage est réalisé en dispositif à guidage de la pièce.

2. Dispositif d'usinage à robot (21) et logement (26) d'outil, comprenant un outil (27) qui s'use pour l'usinage de pièces (24), le logement (26) d'outil comprenant un dispositif de positionnement pour modifier au moins la position de l'outil (27) dans le logement (26) d'outil dans une direction, caractérisé en ce que le dispositif d'usinage comprend une référence (230) placée en un lieu fixe par rapport à l'emplacement du robot pour régler au moins la position de l'outil (27) dans le logement (26) d'outil dans cette direction, alors que l'outil est devant la référence, ainsi que des organes réglables (10) de commande de la mise en contact de l'outil (27) avec la référence (230) et en ce que le dispositif d'usinage est réalisé en dispositif à guidage de l'outil.

3. Dispositif d'usinage selon la revendication 1 ou 2, comprenant un dispositif de positionnement (3, 30, 30', 300, 31, 32, 33) à commande hydraulique et/ou pneumatique pour la modification de la position de l'outil (37).

4. Dispositif d'usinage selon la revendication 1 ou 2, comprenant des organes élastiques constituant le dispositif de positionnement destiné à modifier la position de l'outil (17).

5. Dispositif d'usinage selon l'une des revendications 1 à 4, comprenant des organes de commande (10) qui provoquent le positionnement de l'outil (17) par rapport à la référence (30) et le réajustement de l'outil (17) à la fin d'un nombre sélectionnable de processus de travail et/ou d'une durée sélectionnable de travail.

6. Dispositif d'usinage selon l'une des revendications 1 à 5, comprenant des organes élastiques constituant la commande du positionnement de l'outil (17) dans le logement (16) d'outil, les organes élastiques exerçant une force qui est pratiquement indépendante de la position de l'outil (17) dans le logement (16) d'outil.

7. Dispositif d'usinage selon l'une des revendications 1 à 6, comprenant un système détecteur (35) qui constate et provoque le remplacement de l'outil (37) dans le logement (3) d'outil.

8. Dispositif d'usinage selon l'une des revendications 1 à 7, dans lequel le logement d'outil comprend un dispositif desserrable de blocage (32, 33, 3233, 3132, 30, 300) pour le blocage de la position de l'outil (37) qui a été déterminée à l'aide de la référence (330).
